# EUROPÄISCHE PATENTSCHRIFT

(11) **EP 0 634 550 B1**
(45) Veröffentlichungstag und Bekanntmachung des Hinweises auf die Patenterteilung: **29.12.1997**
(21) Anmeldenummer: 94108500.3
(22) Anmeldetag: 03.06.1994
(51) Int. Cl.: E05C 3/04

(54) **Vorreiberverschluss**
Rotating fastener
Fermeture tournante

(30) Priorität: 12.07.1993 DE 9310330 U
(43) Veröffentlichungstag der Anmeldung: 18.01.1995
(73) Patentinhaber: ELEK GMBH, D-41470 Neuss (DE); DIRAK DIETER RAMSAUER KONSTRUKTIONSELEMENTE GmbH & Co. KG, D-58332 Schwelm (DE)
(72) Erfinder: Ramsauer, Dieter Ing., 42555 Velbert (DE)
(74) Vertreter: Stratmann, Ernst, Dr.-Ing.

(56) Entgegenhaltungen:
- EP-A- 0 025 472
- DE-A- 4 000 517
- DE-A- 4 006 706
- DE-A- 4 006 707

## Beschreibung

Die Erfindung betrifft einen Vorreiberverschluß zur Befestigung von Klappen, Seitenverkleidungen, für das Schließen von Türen o. ä., die aus elektrisch leitendem, mit oberflächlicher Isolierschicht versehenem Wandmaterial, wie lackiertem Stahlblech, bestehen, in Öffnungen, an Rahmenprofilen, Türzargen oder dgl., aus ähnlichem Material, wobei der Vorreiberverschluß aus einem Gehäuse mit Flansch, Durchsteckteil und Hinterende und einer Betätigungswelle mit Betätigungsstirnfläche an einem Ende und Vorreiberzunge am anderen Ende ausgestattet ist und die Vorreiberzunge einerseits axial fixiert ist, andererseits zwischen einer Offenstellung und einer Verschlußstellung verdrehbar ist, in welcher Verschlußstellung der Vorreiber mit seiner Reiberfläche eine Rahmenstrebe des Rahmenprofils, der Türzarge, der Gehäuseöffnung oder dgl. hintergreift.

Aus der DE 40 06 707 A1 ist ein Vorreiberverschluß ähnlich der eingangs genannten Art bekannt, wobei es hier im wesentlichen darum geht, eine billigere Herstellung und eine einfachere Montage zu ermögliche, außerdem eine elektrische Isolierung zu ermöglichen, um so bei Anwendung an Schaltschränken zu verhindern, daß von innen an den Verschluß sich anlegende, unter Spannung stehende Drähte zu einer Gefährdung einer von außen den Verschluß berührenden Person führt.

Derartige Gefährdungen sind besonders zu beachten, wenn es sich bei der zu schließenden Tür oder Seitenverkleidung um Bauteile eines Schaltschrankverschlusses handelt. Die Frage der Gefährdung der an einem Schaltschrank tätigen Personen spielt auch eine Rolle bei der DE 40 00 517 A1, in der ein Verschlußgehäuse mit Flansch zur Montage in einem Durchbruch einer dünnwandigen Fläche, insbesondere Blechschranktür oder Blechkastendeckel beschrieben wird. Hier findet sich eine Ausführungsform, bei der das Verschlußgehäuse mit Hilfe einer Metallfeder in der Durchbruchöffnung für den Verschluß festgelegt wird. Die Befestigungsfeder kann Zahnungen aufweisen, um einen Erdungskontakt zu der Wandfläche herzustellen, in dem der Vorreiberverschluß befestigt werden soll, wobei diese Befestigungsart mit Erdungskontakt dann angewendet wird, wenn das Vorreibergehäuse aus Metall besteht.

Aus der EP 0 025 472 A1 ist ein Vorreiberverschluß bekannt, bei dem die Befestigungsschraube für den Vorreiber Zähne aufweist, die sich in die lackierte Schicht der Befestigungsfläche für den Vorreiberverschluß eingräbt und so einen Erdungskontakt herstellt. Statt der Befestigungschraube kann noch eine U-förmig gestaltete Feder vorgesehen werden, die ebenfalls einen Kratzzahn aufweist, um einen Erdungskontakt zu schaffen.

Bei allen bekannten Vorreiberverschlüßen dient die Herstellung des Erdkontaktes dazu, das Vorreibergehäuse sowie ein in das Vorreibergehäuse einsteckbaren Betätigungsschlüssel mit der meist aus lackiertem Stahlblech bestehenden dünnen Wand elektrisch zu verbinden, in die der Vorreiber eingesetzt ist. Dies soll dazu dienen, zu verhindern, daß der Vorreiber oder ein darin eingesteckter Betätigungsschlüssel gegenüber dieser Metallblechwand (meist handelt es sich um ein aus Stahlblech bestehendes Schaltschranktürblatt) eine Potentialdifferenz aufweist, bedingt beispielsweise durch einen im Schaltschrankinneren losgerissenen Draht, der unter Spannung steht und am Verschlußgehäuse und an der Vorreiberzunge anliegt und diesen unter gefährliche Spannung setzt, so daß eine Bedienungsperson gefährdet wird.

Häufig werden Schaltschränke oder auch Maschinengehäuse derart aufgebaut, daß diese Schränke oder Gehäuse aus Rahmengestellen aus Metallprofil aufgebaut werden, wobei diese Rahmengestelle beispielsweise an ihrer Vorderfläche eine Tür aufweisen, an ihrer Hinterfläche eine Rückwand und an ihren Seitenflächen Seitenwände. Es können aber auch in derartigen Gehäusen Öffnungen vorgesehen sein, um beispielsweise Zugang für eine Betätigungsperson zu ermöglichen, welche Öffnung aber bei normaler Betriebsweise durch eine Klappe oder dgl. verschlossen sein muß. Insbesondere für die Befestigung derartige Seitenwände werden neuerdings vorzugsweise keine Verschraubungen oder Verschweißungen vorgenommen, sondern stattdessen Vorreiberverschlüsse eingesetzt, die die Seitenwände an dem Rahmengestell festhalten. Nähere Einzelheiten dazu finden sich in der bereits genannten DE 40 06 706 A1 des Anmelders.

Zur Abdichtung der Seitenwände gegenüber den Rahmengestellen und auch zur Geräuschminderung werden diese meist aus lackiertem Stahlblech bestehenden Bauteile unter Zwischenlage von Dichtungsstreifen aufeinandergelegt, welche Dichtungsstreifen meist elektrisch-isolierend sind. Das führt dazu, daß durch diese Montageart die einzelnen Bauteile eines Stahlblechschrankes nicht mit Sicherheit elektrisch miteinander verbunden sind. Man kann elektrische Verbindung zwar dadurch erreichen, daß man zwischen den einzelnen Bauteilen, wie Seitenwänden, Rahmengestellstreben, Vordertür und Rückwand Erdungsbänder anbringt, jedoch ist dies sehr umständlich und teuer. Außerdem besteht die Gefahr, daß bei der Montage eines Schrankes vergessen wird, die notwendige Anzahl von Erdungsbändern anzubringen, so daß letztlich immer noch die Gefahr besteht, daß beispielsweise eine der Seitenwände mit dem Rest des Gehäuses oder Schaltschrankes keine ausreichende, niederohmige elektrische Verbindung aufweist, so daß diese Seitenwand bei Kontaktgabe durch einen inneren Schaltdraht o. ä. unter ein hohes Potential gelangen kann, das eine außen mit dem Schrank in Berührung kommende Person gefährdet wird.

Aufgabe der Erfindung ist es, einen Vorreiberverschluß für insbesondere die Befestigung von Klappen und Seitenverkleidungen zu schaffen, der nicht nur seine Befestigungsaufgabe erfüllt, sondern gleichzeitig die Klappe oder Seitenverkleidung oder dgl. mit dem Rahmenprofil, der Türzarge, Klapprahmen oder dgl. elektrisch verbindet, wobei die elektrische Verbindung allein schon durch den Montagevorgang sich ergeben soll, ohne daß also zusätzliche Maßnahmen ergriffen werden müssen, die u. U. vergessen werden könnten.

Gelöst wird die Aufgabe dadurch, daß die Vorreiberzunge aus Metall besteht und einen von der Reiberfläche vorspringenden Kratzzahn bildet, der bei der Verschließbewegung in das ebenfalls aus Metall bestehende oder elektrisch-leitfähige, aber mit einer nicht oder schlecht leitenden Schicht, wie Lackschicht bedeckten Rahmenstrebenoberfläche eindringt und einen Erdungskontakt zwischen Zunge und Rahmenstrebe herstellt.

Durch diese Maßnahme gelingt es, eine ausreichend niederohmige elektrische Verbindung zwischen einerseits der Klappe oder Seitenverkleidung oder dgl. und andererseits dem Profil des Rahmens, der Türzarge oder der Öffnung herzustellen, wobei angesichts der meist mehrfach vorhandenen Vorreiberverschlüsse selbst dann der Erdungskontakt mit ausreichender Niederohmigkeit gewährleistet ist, wenn einer der mehreren Vorreiber infolge besonders dicker Lackschicht keinen ausreichenden Erdungskontakt hergestellt haben sollte. Da meist zumindest vier derartige Vorreiberverschlüsse für eine Seitenverkleidung oder eine Klappe erforderlich sind, genügt es, daß einer von den vier Verschlüssen einen Erdungskontakt ergibt, um eine Gefährdung einer außen befindlichen Person zu verhindern.

Gemäß einer vorteilhaften Weiterbildung der Erfindung steht die Zunge mit dem Gehäuse und das Gehäuse mit dem elektrisch-leitfähigen Wandmaterial jeweils in elektrischer Verbindung. Diese Ausführungsform ist insbesondere dann gegeben, wenn es sich bei dem Vorreibergehäuse um ein Metallgehäuse handelt, das in an sich bekannter Weise mit einer Erdungsmutter oder Erdungsfeder in der aus lackiertem Stahlblech oder dgl. bestehenden Wand derart montiert ist, daß ein Erdungskontakt zwischen dem Gehäuse und der Wand besteht. Falls die Zunge auch mit dem Gehäuse in einer elektrischen Verbindung stehen wird, ergibt sich ein ausreichend niederohmiger elektrischer Weg zwischen einerseits der Wand (wie Türblatt, Seitenwand, Klappe) und Rahmengestell, Türzarge o. ä. andererseits. Alternativ kann aber auch die Zunge zumindest einen weiteren Kratzzahn aufweisen, der auf dem elektrisch-leitfähigem Wandmaterial aufliegt und dadurch ohne Zwischenschaltung des Gehäuses ein elektrischer Kontakt zwischen beispielsweise Rahmengestell einerseits und Seitenverkleidung andererseits herstellen. In diesem Falle ist die Ausführungsform des Verschlußgehäuses selbst ohne Bedeutung, sie kann beispielsweise auch aus isolierendem Kunststoff bestehen.

Es wurde bereits erwähnt, daß das Gehäuse mittels einer Metallfeder innerhalb des Durchbruches der Wand oder dgl. gehalten sein kann. Es gibt nun eine Ausführungsform, bei der die Metallfeder gleichzeitig auch die Vorreiberzunge bildet, wodurch eine Ausführungsform entsteht, die ggf. nur aus zwei Teilen besteht, die gleichwohl alle hier erforderlichen Funktionen erfüllen, nämlich einerseits die Befestigungsfunktion zwischen beispielsweise Seitenverkleidung und Rahmengestell, wie auch die Erdungsfunktion, auch wiederum zwischen dem Metallblech beispielsweise der Seitenverkleidung einerseits und dem Rahmengestell andererseits.

Die Erfindung wird nachfolgend anhand von Ausführungsbeispielen näher erläutert, die in den Zeichnungen dargestellt sind.

Es zeigt:
- Fig. 1: in einer teilweise geschnittenen Seitenansicht eines in einer Seitenwand eines Schaltschrankes montierten Vorreiberverschlusses;
- Fig. 2: die Zunge dieses Vorreiberverschlusses in einer Ansicht von unten;
- Fig. 3: die Zunge des Verschlusses in einer Seitenansicht;
- Fig. 4: die Zunge des Verschlusses in einer Ansicht von oben mit der Darstellung der Rißlinie für den Kratzzahn;
- Fig. 5: eine weitere Ausführungsform eines erfindungsgemäß ausgestalteten Vorreiberverschlusses, der aus nur zwei Teilen besteht;
- Fig. 6: eine Ansicht auf die federartige Zunge der Fig. 5;
- Fig. 7: eine Seitenansicht auf die Zunge der Fig. 5;
- Fig. 8: eine Seitenansicht auf das "Gehäuse" des Verschlusses;
- Fig. 9: eine Rückansicht auf das "Gehäuse"; und
- Fig. 10 bis 12: in drei Ansichten eine alternative Zunge.

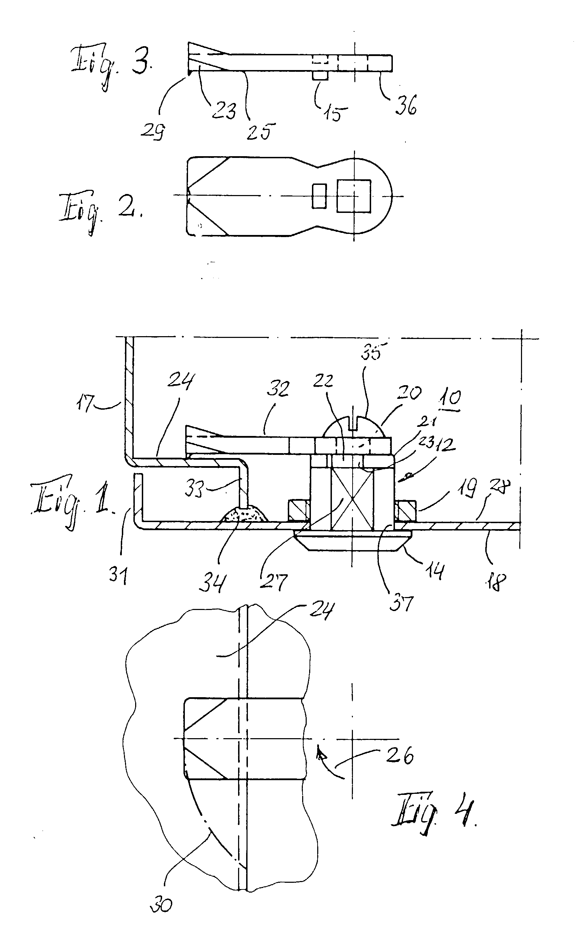

Fig. 1 zeigt in einer Seitenansicht einen Vorreiberverschluß 10, bestehend aus einem Gehäuse 12 mit Flansch 14 und einem Durchsteckteil 16, der in eine entsprechende Öffnung einer Wand 18 eingesteckt und mittels Mutter 19 festgeschraubt ist. Die Wand 18 kann die Verschlußklappe für eine Öffnung in einem Maschinengehäuse 17 sein, oder die Seitenverkleidung 18 eines beispielsweise aus lackiertem Stahlblech bestehenden Schaltschrankes sein, von dem das Bauteil 17 dann ein Rahmenteil sein würde, oder es kann sich bei 18 um das Türblatt eines Blechschrankes handeln, von dem das Bauteil 17 dann die Türzarge wäre.

Der Vorreiberverschluß 10 weist eine Zunge 32 auf, die in den Fig. 2 und 3 in einer Ansicht von oben und in einer Seitenansicht zu erkennen ist und die auf eine Welle 20 drehstarr aufsteckbar und beispielsweise mit einer Befestigungsmutter fixierbar ist. Die Welle 20 ist in dem Inneren des Durchsteckteils 16 drehbar gelagert, wobei ein Vorsprung oder Nase in einem vom Hinterende 21 gebildeten, ringförmigen Rücksprungbereich 22 mit Anschlagflächen 23 läuft und so eine Drehwegbegrenzung der Zunge 32 bezüglich des Gehäuses 12 bilden kann. Der Vorreiber 32 weist in üblicher Weise von seiner Reiberfläche 25 sich wegerstreckende Auflaufschrägen 23 auf, um so das Auflaufen der Reiberfläche 25 auf eine von einer Rahmenstrebe oder dgl., 17, gebildete Hintergrifffläche 24 zu erleichtern, wenn der Verschluß in seine Schließstellung gedreht wird, siehe beispielsweise den Pfeil 26 in Fig. 4. Zum Verdrehen des Verschlusses kann am anderen Ende der Welle 20 ein hier nicht näher dargestellter Betätigungsansatz vorgesehen sein, wie Vierkantöffnung, Dreikantöffnung oder dgl., um ein Werkzeug wie Mehrkantschlüssel einstecken zu können, um den Verschluß zu betätigen und anschließend den Schlüssel wieder herauszuziehen und so eine nur wenig über die Außenfläche des Türblattes oder dgl. vorspringende Verschlußanordnung zu erhalten. Das Gehäuse 12, das Abflachungen 27 aufweist, um eine drehfeste Anordnung in dem Durchbruch in dem Türblatt oder dgl., 18, vornehmen zu können, kann mit einer Mutter 19 in der Wand 18 befestigt werden, die mit zahnartigen Vorsprüngen versehen ist, welche sich in die Fläche 28 der Wand 18 eingraben, um so selbst dann, wenn diese Wand aus einem lackierten Metallblech, wie Stahlblech, besteht, zwischen dem Metall dieser Wand 28 von der Mutter 19 einen elektrischen Kontakt herzustellen, sofern die Mutter 19 aus Metall besteht. Die metallische Mutter 19 wiederum überträgt den Erdungskontakt auf den ebenfalls vorzugsweise aus Metall bestehenden Gehäusekörper 12, der wiederum in elektrischer Verbindung steht mit der ebenfalls aus Metall bestehenden Zunge 32.

Um nun einen elektrischen Kontakt zwischen der aus Metall bestehenden Wand 18 und der aus Metall bestehenden Wand 17 herzustellen, dient ein von der Reiberfläche 25 der Zunge 32 ausgehender Kratzzahn 29, der sich bei der Schließbewegung der Zunge (Pfeil 26 in Fig. 4) in das die Fläche 24 eventuell abdeckende isolierende Material (wie Lackschicht) eingräbt und so einen Erdungskontakt herstellt. In Fig. 4 ist die entsprechende Rißlinie, die von dem Kratzzahn 29 bei der Drehbewegung des Vorreibers erzeugt wird, mit der Bezugszahl 30 versehen.

Üblicherweise sind die Wände 18 bzw. 17 an ihren Seitenkanten mit Abkantungen 31, 33 versehen, um so eine versteifende Funktion auszuüben. Es ist auch üblich, zwischen die Innenfläche der einen Wand, hier 18, und der Stirnfläche der Abkantung der anderen Wand, hier 17, einen Dichtungsstreifen anzuordnen, der hier mit 34 bezeichnet ist. Dieser Dichtungsstreifen ergibt für die vorliegende erfindungsgemäße Anordnung den zusätzlichen Vorteil, daß er neben seinem Dichtungseffekt noch eine bestimmte Druckkraft ausübt, die sich von der Fläche 24 auf die Zunge 32 überträgt und somit zu einer bestimmten Presskraft des Zahnes 29 auf die Fläche 24 führt, so daß die Zahnform an eine Presskraft angepaßt sein kann, die in einem bestimmten vorher bestimmbaren Bereich liegt. Die Zahnschärfe kann somit so ausgestaltet werden, daß sie innerhalb des vorhersehbaren Presskraftbereiches sicher eine eventuelle Lack oder sonstige isolierende Schicht auf der Oberfläche 24 des aus Metallblech bestehenden Rahmenteils 17 durchdringt, andererseits aber nicht so scharf ist, daß sie bei mehrfacher Betätigung des Verschlusses zu schnell abstumpft und ihre Kratzwirkung verliert. Da ein derartiger Verschluß bei bestimmten Anwendungsfällen häufiger gelöst und wieder geschlossen werden wird, wobei nicht unbedingt die Rißlinie 30 jedesmal übereinstimmt, ist es von Bedeutung, daß der Zahn 29 auch nach mehrfacher Betätigung jeweils eine neue Rißlinie schaffen kann, die ausreichend tief ist, um eine Erdung sicher herzustellen.

Insbesondere dann, wenn es sich bei der Wand 18 um die Seitenwand oder die Rückwand eines Metallschrankes handelt, während das Bauteil 17 eine Schrankstrebe darstellt, kann es vorkommen, daß diese Seitenwand häufiger abgenommen und wieder montiert werden muß. Die Lage der Seitenwand 18 zu den Streben 17 wird bei jeder neuen Montage nicht genau übereinstimmen, so daß jedesmal eine neue Rißlinie 30 entstehen kann.

Eine derartige Seitenwand 18 wird üblicherweise mit mindestens vier derartigen Verschlüssen 10 befestigt, mit jeweils einem derartigen Verschluß in der Nähe der vier Ecken der Wand, was den Vorteil hat, daß es für den Erdungszweck ausreicht, daß zumindest einer der vier Erdungsverschlüsse einen ausreichenden Erdungskontakt durch seinen Zahn 29 herstellt, da die verschiedenen Rahmenstreben 17 üblicherweise miteinander verschweißt sind und so ein einheitlich auf gleichem elektrischen Potential befindliches Bauteil darstellen.

Das Verschlußgehäuse 12 muß nicht unbedingt aus Metall bestehen. Es kann auch aus (elektrisch nicht-leitendem) Kunststoff hergestellt sein, wobei dann jedoch sichergestellt werden muß, daß zwischen der Zunge 32 und der Wand 18 gleichwohl ein elektrischer Kontakt vorhanden ist. Dieser kann geschaffen werden durch eine aus Metall bestehende Federanordnung, die von der Auflagefläche 36 bis zur Wand 18 reicht, beispielsweise bis zur Innenkante 37 des Durchbruchs in der Wand 18, oder auch bis zur einen der beiden den Durchbruch umgrenzenden Oberflächen der Wand 18. Derartige Erdungsfederanordnungen sind aus der bereits genannten DE 40 00 517 A1 des Anmelders bekannt. Diese Federn können, anstelle der Mutter 19, auch zu Befestigungszwecken für das Gehäuse 12 herangezogen werden, wie diese Druckschrift ebenfalls zeigt. Die Kombination dieser an sich bekannten Anordnung mit der neuartigen Zunge 32 stellt eine besonders günstige Ausführungsform dar.

In den Fig. 5 bis 9 ist eine Ausführungsform dargestellt, die diesen Gedanken weiterführt, indem die Vorreiberzunge 132 gleichzeitig auch eine Befestigungs- und Erdungsfeder für den Verschluß bildet, wobei ein vereinfachter Durchsteckteil 112 zur Anwendung gelangt, der entweder aus Metall oder aber auch aus Kunststoff bestehen kann, da seine Leitfähigkeit hier nicht wesentlich ist, weil die die Zunge 132 bildende Befestigungsfeder direkt auf der Fläche 128 der Wand 118 zu liegen kommt und dadurch einen direkten Erdungskontakt herstellen kann. Dieser Erdungskontakt kann noch verbessert werden durch einen weiteren Zahn 38, der sich in ein eventuelles Lackmaterial auf der Fläche 128 in ähnlicher Weise eingräbt, wie es für den Zahn 129 bezüglich der Fläche 124 bei der Ausführungsform gemäß Fig. 1 bis 4 beschrieben wurde.

Da die Zunge 132 aus Federmaterial besteht, beispielsweise aus Federstahl, ergibt sich hier der weitere Vorteil, daß die Andruckkraft auch von dieser Federkraft bestimmt werden kann, also z. B. nicht von der Druckkraft der Dichtung 134 abhängt.

Die Federzunge 132 könnte, ähnlich wie bei der Ausführungsform gemäß Fig. 1, mit Hilfe einer Befestigungsschraube auf eine Welle aufgebracht werden, die durch die Wand 118 hindurchreicht, wobei diese Welle direkt in einem Wanddurchbruch in der Wand 118 gelagert sein könnte, oder aber in einem zusätzlichen Gehäuse, wie es bei Fig. 1 der Fall war. Einfacher ist es, gemäß Fig. 5 den Durchsteckteil 116 selbst als Welle auszunutzen, also auf eine in der Wand 118 (drehstarr) zu befestigende Gehäuseanordnung zu verzichten, so daß dadurch schon eine Reduzierung der benötigten Bauteile sich ergibt. Eine weitere Vereinfachung ergibt sich dadurch, daß anstelle der Schraubenbefestigung der Zunge 132 auf den Durchsteckteil 116 stattdessen eine Steckbefestigung gewählt wird, die beispielsweise dadurch verwirklicht werden kann, daß das Durchsteckteil 116 mit zwei sich gegenüberliegenden Nuten 39 versehen ist, die zueinander parallel laufende Grundflächen 40 und seitliche Anlageflächen 41, 42 bilden. Desweiteren ist die Zunge 132 an ihrem vom Kratzzahn 129 abgewandten Ende mit einem axialen Einschnitt 43 versehen, der in seinm Endbereich 44 eine solche Breite und Axialerstreckung aufweist, daß er die von den Nuten 39 gebildeten sich gegenüberliegenden Grundflächen 40 und die zwischen diesen Grundflächen 40 gebildeten verbleibenden Materialbereich des Durchsteckteils 116 aufzunehmen in der Lage ist. Im Eingangsbereich 45 ist der Einschnitt vorzugsweise etwas verengt, derart, daß beim Aufschieben der Zunge 132 auf das Durchsteckteil 116 die durch den Einschnitt 43 gebildeten Schenkel 46, 47 die Federn auseinandergebogen werden und nach Erreichen des Endbereiches 44 zurückfedern und dadurch die Zunge 132 auf dem Durchsteckteil 116 in gewisser Weise arretieren.

Wie die Seitenansicht gemäß Fig. 4 erkennen läßt, ist die federartige Zunge 132 im Bereich des Kratzzahnes 38 und im Bereich des Eingangsbereiches 45 im wesentlichen eben, so daß sie sich hier auf die Fläche 128 der Wand 118 platt auflegen kann. In dem dazwischen liegenden Bereich, der auch den Endbereich 44 des Einschnittes 43 umfaßt, ist dagegen die Zunge 132 nach oben gewölbt, siehe 48 in Fig. 7, derart, daß sich die Feder mit ihrer Wölbung 48 an die seitliche Anlagefläche 41 mit der Nut 39 anlegt und abstützt. Dadurch wird einerseits die Feder 132 an die Fläche 128 angepreßt, andererseits der Flanschteil 114 mit seinem vorspringenden Randbereich an die Wandfläche der Wand 118 im Bereich des Durchbruches, durch den das Durchsteckteil 116 hindurchgesteckt ist.

Der Flanschteil 114 kann mit einer Mehrkanteinsenkung versehen sein, um ein Mehrkantwerkzeug einzustecken und das Durchsteckteil 116, zusammen mit der federartigen Zunge 132, in dem Durchbruch zu verdrehen. Auf diese Weise kann der in den Fig. 5 bis 9 dargestellte Verschluß von seiner nicht dargestellten Offenstellung in die dargestellte Verschlußstellung gedreht werden. Alternativ kann aber auch, wie dargestellt, in dem Flanschteil 114 ein einfacher Schlitz 49 oder Kreutzschlitz angeordnet sein, um beispielsweise mit Hilfe eines Schraubenziehers den Verschluß zu betätigen.

Die Feder 132 besitzt einen Verkröpfungsbereich 50, der zweckmäßigerweise angepaßt ist an die Versetzung der Oberfläche 124 gegenüber der Oberfläche 128, also im wesentlichen die Dicke der Dichtung 134 und die Dicke der Wand 124 umfaßt. Zur Anpassung an unterschiedliche Dichtungsdicken oder Dicken der Wand 124 können Federn 132 mit unterschiedlicher Verkröpfung 50 auf Lager gehalten werden, wobei die Form des Durchsteckteils 116 unverändert gelassen werden kann.

Da die beiden Bauteile einfache Spritzgußbauteile bzw. Stanzbeuteile darstellen, ist eine derartige Konstruktion außerordentlich billig in der Herstellung, abgesehen von der einfachen Montage, die es lediglich erfordert, das Durchsteckteil 116 durch eine entsprechende runde Durchbruchöffnung in der Wand 118 hindurchzustecken und anschließend seitlich die Feder 132 so aufzuschieben, daß die beiden Schenkel 46, 47 der Feder 132 in die Nuten 39 des Durchsteckteils 116 gelangen, bis die Arretierung greift, die durch die Ecken 51 zwischen den beiden Bereichen 44 und 45 gebildet sind. Nachdem die entsprechende Anzahl von derartigen Verschlüssen (z. B. 4, 6 oder 8) in der Wand (z. B. Seitenwand 118) angeordnet wurden, wobei die Längsachsen der Federn 132 zunächst parallel zur jeweiligen Wandinnenkante angeordnet sind, wird die Seitenwand 118 auf die in der Anordnung 124 gebildete Öffnung oder dgl. aufgelegt, und ggf. unter Zwischenlage der Dichtung 134, und dann anschließend mit einem Werkzeug, wie Schraubenschlüssel, durch Verdrehen der einzelnen Verschlüsse 110 in der in Fig. 5 dargestellten Stellung die Wand 118 in dem Rahmen 124 oder dgl. gesichert.

Gleichzeitig wird bei dieser Verschlußbewegung durch Verdrehen der Zahn 38 in der Oberfläche 128 und der Zahn 129 an der Oberfläche 124 einen Kratzweg und eine dadurch bewirkte Erdung erreichen, so daß anschließend nicht nur die mechanische Montage erreicht ist, sondern gleichzeitig die gewünschte Erdungsverbindung zwischen den metallischen Bauteilen 117 und 118, siehe Fig. 5.

Der Kratzzahn 129 ergibt sich bei der hier dargestellten Ausführungsform automatisch durch eine entsprechende Form des Stanzwerkzeuges, bevor die Feder dann gehärtet wird, wobei auch hier Auflaufschrägen 123 vorgesehen werden können.

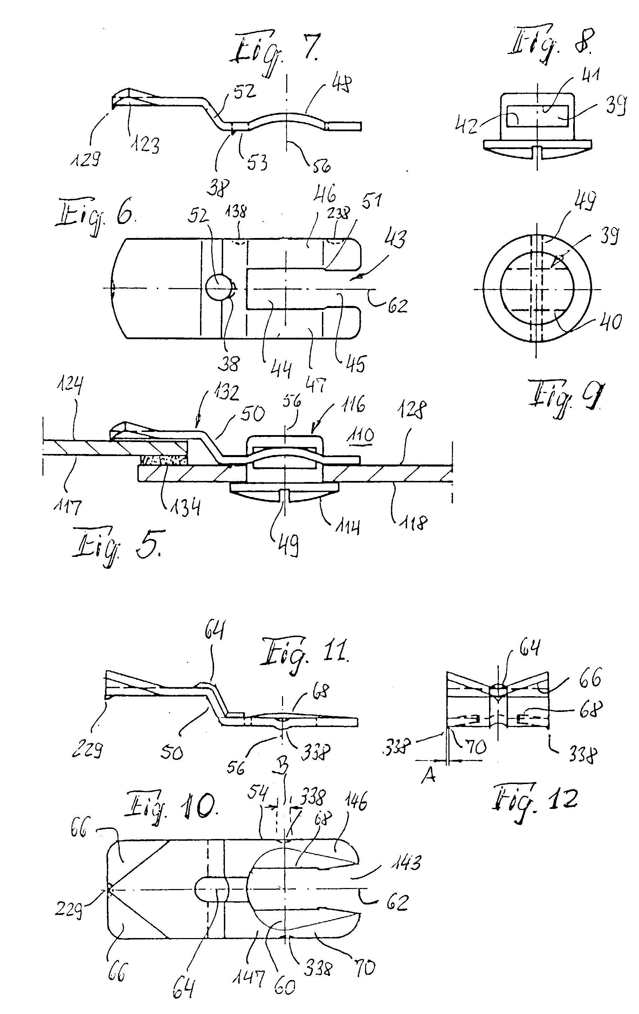

Der Kratzzahn 38 erhält seine besondere Schärfe dadurch, daß vorzugsweise ein Durchbruch 52 im Bereich der Verkröpfung 50 vorgesehen wird, von dessen Rand aus das zur Bildung des Zahns 38 notwendige Material weggebogen wird. Dieser Durchbruch hat auch den Vorteil, daß abgekratztes Material freikommt und sich nicht in ungewünschter Weise zwischen Fläche 128 der Wand 118 und Fläche 53 der Federzunge 132 legt und dadurch eventuell wieder ein Abheben und damit eine Isolierung erzeugt. Auch die Außenkante 54 könnte - z. B. durch Stanzen - in Richtung auf die Fläche 128 scharfkantig sein (z. B. durch Gratbildung) oder besonders herausgedrückte Zähne 138, 238, 338 aufweisen, siehe Fig. 6 und Fig. 10. Damit der bei 338 in Fig. 10 angedeutete Zahn auf der Fläche 128 aufliegt, ist bei der in Fig. 10 (Draufsicht), Fig. 11 (Seitenansicht) und Fig. 12 (Frontansicht) dargestellten Zunge die Wölbung 48 statt zylinderschalenförmig (wie in Fig. 5 bis 7 dargestellt) kugelschalenförmig bzw. birnenschalenförmig ausgebildet, derart, daß die Federbeine 146, 147 mit ihren inneren Bereichen 68 (die den Einschnitt 143 begrenzen) an der Schulter 41 (Fig. 8) anliegen, mit ihren äußeren Bereichen 70 (die an den Kanten 54 enden) aber an der Fläche 128 anliegen.

Bei der Zunge gemäß Fig. 10 bis 12 liegen die beiden Kratzzähne 338 auf einem durch die Drehachse 56 des Verschlusses laufenden Radius 60 und schneiden somit Kratzkreise, deren Tangenten jeweils in Richtung der Längserstreckung (B) der entlang der Kante 54 der Feder verlaufenden Zahnschneide verläuft, im Gegensatz zu den Zähnen 138, 238, wo die Zahnschneide schräg zur Kreislinie liegt und eine breitere, weniger tiefe Kratzspur bewirkt. Die Sicherheit des Eindringens durch zähe oder harte Lackschichten kann dadurch beeinträchtigt sein. Ein weiterer Vorteil der Anordnung des Zahnes 338 von Fig. 10 bis 12 (im Gegensatz zu der Anordnung des Zahnes 38 in Fig. 5 bis 7) ist der, daß die Aufschubrichtung der Feder (entlang der Achse 62) zu der Schneidenerstreckung (B, viel größere als Schneidenbreite A) der Zähne 338 parallel liegt, so daß auch schon beim Aufschieben der Federzunge eine scharfe Kratzspur erzeugt wird. Die entsprechende Kratzspur des Zahnes 38 ist wegen seiner Quererstreckung breiter. Dort entsteht ein ausreichender Erdungskontakt möglicherweise erst bei der anschließenden Drehbewegung des Verschlusses, wenn dieser geöffnet oder geschlossen wird.

Die Ausführungsform gemäß Fig. 10 bis 12 läßt im übrigen noch eine Verstärkungssicke 64 im Verkröpfungsbereich 50 erkennen, desweiteren einen trichterförmigen Einsteckbereich 143 und Auflaufschrägen 66.

## Patentansprüche

1. Vorreiberverschluß (10, 110) zur Befestigung von Klappen, Seitenverkleidungen, für das Schließen von Türen (18, 118) o. ä., die vorzugsweise aus einem elektrisch-leitendem, mit oberflächlicher Isolierschicht versehenem Wandmaterial, wie lackiertem Stahlblech, bestehen, zur Befestigung in einem Durchbruch in diesem Wandmaterial, wobei der Vorreiberverschluß (10, 110) aus einem Durchsteckteil (16, 116) mit Flansch (14, 114) und einem als Betätigungswelle (20) wirkendem Teil besteht, der mit einer Betätigungsstirnfläche an einem Ende und mit einer Vorreiberzunge (32, 132) am anderen Ende ausgestattet ist und die Vorreiberzunge einerseits axial fixiert, andererseits zwischen einer Offenstellung und einer Verschlußstellung verdreht, in welcher Verschlußstellung der Vorreiber auf seiner Reiberfläche (25) eine Rahmenstrebe (24) eines Rahmenprofils, einer Türzarge, der Gehäuseöffnung (17) oder dgl. hintergreift, dadurch gekennzeichnet, daß die Vorreiberzunge (32, 132) aus Metall besteht und einen von der Reiberfläche (25) in Richtung auf die Rahmenstrebe (24) vorspringenden Kratzzahn (29, 129) bildet, der bei der Verschließbewegung (26) in die ebenfalls aus Metall bestehende oder elektrisch-leitfähige, aber mit einer nicht- oder schlecht-leitenden Schicht, wie Lackschicht bedeckte Rahmenstrebenoberfläche (24) eindringt und einen Erdungskontakt zwischen Vorreiberzunge (32, 132) und Rahmenstrebe (24, 124) herstellt.

2. Vorreiberverschluß nach Anspruch 1, dadurch gekennzeichnet, daß die Zunge (32) mit dem Durchsteckteil (12) und das Durchsteckteil (12) mit dem elektrischleitendem Wandmaterial (18) jeweils in elektrischer Verbindung steht.

3. Vorreiberverschluß nach Anspruch 1, dadurch gekennzeichet, daß die Vorreiberzunge (132) zumindest einen weiteren Kratzzahn (38) aufweist, der auf dem elektrisch-leitfähigem Wandmaterial (118) aufliegt.

4. Vorreiberverschluß nach einem der Ansprüche 1 bis 3, dadurch gekennzeichnet, daß der Durchsteckteil (12, 112) mittels einer Metallfeder (z. B. 132) im Durchbruch der Wand (118) oder dgl. gehalten ist.

5. Vorreiberverschluß nach Anspruch 4, dadurch gekennzeichnet, daß die Metallfeder (132) gleichzeitig die Vorreiberzunge bildet.

6. Vorreiberverschluß nach einem der Ansprüche 1 bis 3, dadurch gekennzeichnet, daß das Gehäuse mit einer Erdungsmutter (19) im Durchbruch der Wand (18) gehalten ist.

7. Vorreiberverschluß nach Anspruch 6, dadurch gekennzeichnet, daß vom Innenkantenbereich (37) des Durchbruchs bis zur Auflagefläche (36) der Vorreiberzunge (32) auf dem Durchsteckteil (12) eine durch ein Metall- oder Federteil gebildete elektrische Verbindung hergestellt ist.

8. Vorreiberverschluß nach Anspruch 5, dadurch gekennzeichnet, daß die Vorreiberzunge in ihrem mit dem Durchsteckteil in Verbindung stehenden Bereich einen Einschnitt (43) bildet, bei dem die Vorreiberzunge (132) auf das Durchsteckteil, beispielsweise in von diesem gebildete Nuten (39) aufsteckbar ist.

9. Vorreiberverschluß nach Anspruch 8, dadurch gekennzeichnet, daß der Einschnitt (43) in seinem Eingangsbereich (45) eine Verengung bildet, die die Vorreiberfeder (132) in ihrer auf dem Durchsteckteil (116) aufgeschobenen Stellung arretiert.

10. Vorreiberverschluß nach Anspruch 8 oder 9, dadurch gekennzeichnet, daß die Vorreiberfeder (132) im Bereich des Einschnitts (43) eine zylinder- oder kugelschalenförmige Wölbung (48) aufweist, mit der sie sich gegen vom Durchsteckteil (116) gebildete Nutenwände (41) abstützt.

11. Vorreiberverschluß nach Anspruch 8, 9 oder 10, dadurch gekennzeichnet, daß der weitere Zahn (38) von der Kante eines Durchbruchs (52) ausgeht, der anschließend an den Einschnittbereich (43) angeordnet ist.

12. Vorreiberverschluß nach Anspruch 10, dadurh gekennzeichnet, daß ein oder mehrere weitere Zähne (138, 238, 338) von den Außenkanten (54) der Vorreiberzunge im Bereich des Einschnitts (43), insbesondere einer kugelschalenförmigen Wölbung ausgehen.

13. Vorreiberverschluß nach einem der Ansprüche 8 bis 12, dadurch gekennzeichnet, daß zwischen den die beiden Zähne (129; 38) tragenden Bereichen eine Verkröpfung (50) vorgesehen ist.

14. Vorreiberverschluß nach einem der Ansprüche 8 bis 13, dadurch gekennzeichnet, daß der aus Metall oder Kunststoff bestehende Durchsteckteil (116) in seiner Stirnfläche eine Mehrkant- oder Schlitzeinsenkung (49) zur Aufnahme eines Betätigungswerkzeuges aufweist.

## Claims

1. Sliding bolt lock (10, 110) for fixing flaps, side panels, for closing doors (18, 118) etc., which preferably consist of an electrically conducting wall material provided with a surface insulating layer such as painted steel sheet, for fixing in an opening in this wall material, the sliding bolt lock (10, 11) consisting of a push-through part (16, 116) with a flange (14, 114) and a part acting as an actuation shaft (20), which is fitted at one end with an actuation face and at the other end with a sliding bolt tongue (32, 132), and which axially fixes the sliding bolt tongue at one end and on the other end pivots it between an open position and a closed position in which closed position the sliding bolt engages on its slide surface (25) a frame strut (24) of a frame profile, a door frame, the housing opening (17) or the like, characterized in that the sliding bolt tongue (32, 132) is made of metal and forms a scraper tooth (29, 129) projecting from the slider surface (25) in the direction of the frame strut (24), which in the closing movement (26) penetrates the frame strut surface (24) which is also made of metal or is made electrically conductive but which is coated with a non- or poorly conducting layer such as a layer of paint, and which provides an earthing contact between the sliding bolt tongue (32, 132) and the frame strut (24, 124).

2. Sliding bolt lock as claimed in Claim 1, characterized in that the tongue (32) is electrically connected to the push-through part (12), and the push-through-part in turn is electrically connected to the electrically conductive wall material (18).

3. Sliding bolt lock as claimed in Claim 1, characterized in that the sliding bolt tongue (132) has at least one further scraper tooth (38) which lies on the electrically conductive wall material (118).

4. Sliding bolt lock as claimed in Claims 1 to 3, characterized in that the push-through part (12, 112) is held by means of a metal spring (e.g. 1332) in the opening of the wall (118) or the like.

5. Sliding bolt lock as claimed in Claim 4, characterized in that the metal spring (132) forms at the same time the sliding bolt tongue.

6. Sliding bolt lock as claimed in Claims 1 to 3, characterized in that the housing is held by an earthing nut (19) in the opening of the wall (18).

7. Sliding bolt lock as claimed in Claim 6, characterized in that from the inside edge area (37) of the opening to the support surface (36) of the sliding bolt tongue (32) on the push-through part (12) an electrical connection formed by a metal or spring part is provided.

8. Sliding bolt lock as claimed in Claim 5, characterized in that the sliding bolt tongue in the area in which it is connected to the push-through part forms a notch (43) in which the sliding bolt tongue (132) can be pushed on to the push-through part, for example in grooves (39) formed by the former.

9. Sliding bolt lock as claimed in Claim 8, characterized in that the notch (43) in its entrance area (45) forms a constriction, which locks the sliding bolt spring (132) in its position pushed on to the push-through part (116).

10. Sliding bolt lock as claimed in Claim 8 or 9, characterized in that the sliding bolt spring (132) in the area of the notch (43) has a convexity (48) in the shape of a cylinder or a spherical shell, by which it is supported against groove walls (41) formed by the push-through part (116).

11. Sliding bolt lock as claimed in Claim 8, 9 or 10, characterized in that the other tooth (38) emerges from the edge of an opening (52), which is then fitted on to the notch area (43).

12. Sliding bolt lock as claimed in Claim 10, characterized in that one or more further teeth (138, 238, 338) emerge from the outside edges (54) of the sliding bolt tongue in the area of the notch (43), particularly a convexity in the shape of a spherical shell.

13. Sliding bolt lock as claimed in any one of Claims 8 to 12, characterized in that between the areas bearing the two teeth 9129; 38) a cranked portion (50) is provided.

14. Sliding bolt lock as claimed in any one of Claims 8 to 13, characterized in that the push-through part (116) made of metal or plastic has in its face a multi-edged or slotted recess (49) for accommodating an actuation tool.

## Revendications

1. Fermeture à tourniquet (10, 110) pour la fixation de volets, d'habillages latéraux, pour la fermeture de portes (18, 118) ou similaires, qui sont de préférence constitués d'un matériau de paroi conducteur de l'électricité et pourvu d'une couche de surface isolante, telle qu'une tôle d'acier peinte, pour la fixation dans une traversée dans ce matériau de paroi, la fermeture à tourniquet (10, 110) étant constituée d'une partie traversante (16, 116) avec une bride (14, 114), et d'une partie faisant office d'axe d'actionnement (20), qui est équipée d'une surface frontale d'actionnement à une extrémité et d'une patte de tourniquet (32, 132) à l'autre extrémité, et qui fixe d'une part axialement la patte de tourniquet et la tourne d'autre part entre une position d'ouverture et une position de fermeture, dans laquelle le tourniquet engage par l'arrière sur sa surface de retenue (25) un montant de cadre (24) d'un profil de cadre, d'une huisserie de porte, de l'ouverture d'un boîtier (17) ou similaire, caractérisée en ce que la patte de tourniquet (32, 132) est réalisée en métal et forme une dent acérée (29, 129) qui fait saillie en direction du montant de cadre (24) et qui pénètre lors du mouvement de fermeture (26) dans la surface du montant de cadre (24), lequel est également constitué en métal ou en un matériau capable de conduire l'électricité, mais est revêtu d'une couche non conductrice ou mauvaise conductrice, telle qu'une couche de peinture, et établit un contact de mise à la terre entre la patte de tourniquet (32, 132) et le montant de cadre (24, 124).

2. Fermeture à tourniquet selon la revendication 1, caractérisée en ce que la patte (32) est reliée à la partie traversante (12), et la partie traversante (12) est reliée au matériau de paroi conducteur de l'électricité (18), respectivement de manière électrique.

3. Fermeture à tourniquet selon la revendication 1, caractérisée en ce que la patte de tourniquet (132) comporte au moins une autre dent acérée (38) qui repose sur le matériau de paroi conducteur de l'électricité (118).

4. Fermeture à tourniquet selon l'une des revendications 1 à 3, caractérisée en ce que la partie traversante (12, 112) est tenue au moyen d'un ressort métallique (par exemple 132) dans la traversée de la paroi (118) ou similaire.

5. Fermeture à tourniquet selon la revendication 4, caractérisée en ce que le ressort métallique (132) forme simultanément la patte de tourniquet.

6. Fermeture à tourniquet selon l'une des revendications 1 à 3, caractérisée en ce que le boîtier est tenu dans la traversée de la paroi (18) au moyen d'un écrou de mise à la terre (19).

7. Fermeture à tourniquet selon la revendication 6, caractérisée en ce que depuis la région de l'arête intérieure (37) de la traversée jusqu'à la surface d'appui (36) de la patte de tourniquet (32) sur la partie traversante (12) est établie une liaison électrique formée au moyen d'une pièce de métal ou d'une pièce de ressort.

8. Fermeture à tourniquet selon la revendication 5, caractérisée en ce que la patte de tourniquet forme, dans sa région en liaison avec la partie traversante, une entaille (43) dans laquelle peut être enfichée la patte de tourniquet (132) sur la partie traversante, par exemple dans des gorges (39) formées par celle-ci.

9. Fermeture à tourniquet selon la revendication 8, caractérisée en ce que l'entaille (43) forme dans sa région d'entrée (45) un rétrécissement qui arrête le ressort de tourniquet (132) dans sa position enfilée sur la partie traversante (116).

10. Fermeture à tourniquet selon l'une ou l'autre des revendications 8 et 9, caractérisée en ce que le ressort de tourniquet (132) présente dans la région de l'entaille (43) une courbure (48) en forme de coquille cylindrique ou sphérique, avec laquelle il s'appuie contre les parois des gorges (41) formées par la partie traversante (116).

11. Fermeture à tourniquet selon l'une des revendications 8, 9 ou 10, caractérisée en ce que l'autre dent (38) part de l'arête d'une traversée (52) qui est agencée à la suite de la région d'entaille (43).

12. Fermeture à tourniquet selon la revendication 10, caractérisée en ce qu'une ou plusieurs autres dents (138, 238, 338) partent des arêtes extérieures (54) de la patte de tourniquet dans la région de l'entaille (43), en particulier d'une courbure en forme de coquille sphérique.

13. Fermeture à tourniquet selon l'une des revendications 8 à 12, caractérisée en ce qu'un coude (50) est prévu entre les régions qui portent les deux dents (129 ; 38).

14. Fermeture à tourniquet selon l'une des revendications 8 à 13, caractérisée en ce que la partie traversante (116) constituée en métal ou en matière plastique présente dans sa surface frontale un renfoncement polygonal ou en forme de fente (49) pour la réception d'un outil d'actionnement.
